# EUROPÄISCHE PATENTSCHRIFT

(11) **EP 1 840 435 B1**
(45) Veröffentlichungstag und Bekanntmachung des Hinweises auf die Patenterteilung: **09.02.2011**
(21) Anmeldenummer: 06006971.3
(22) Anmeldetag: 31.03.2006
(51) Int. Cl.: F16L 19/00

(54) **Rohrverbindungs-Fittingsystem mit Siegelring**
Pipe coupling with locking ring
Raccord pour tuyaux avec anneau de blocage

(43) Veröffentlichungstag der Anmeldung: 03.10.2007
(73) Patentinhaber: Hawle Armaturen GmbH, 83395 Freilassing (DE)
(72) Erfinder: Käfer, Manuela, 5310 Mondsee (AT)
(74) Vertreter: Schwabe - Sandmair - Marx

(56) Entgegenhaltungen:
- CH-A- 396 535
- US-A- 5 094 491
- US-A- 5 263 312
- US-A- 6 050 609

## Beschreibung

Die Erfindung betrifft ein Rohrverbindungs-Fittingsystem, wie es z.B. bei der Verbindung von Rohren für den Transport von Gasen oder Flüssigkeiten eingesetzt wird, siehe z.B. US-A-6050609. Bei solchen Rohrverbindungs-Fittingsystemen wird ein erstes Fittingteil, z.B. ein Konusring, an einem zweiten Fittingteil (Gehäuse) montiert. Der Fitting übergreift und befestigt dann ein oder mehrere in ihm verlaufende Rohrenden und stellt damit die Rohrverbindung her.

Üblicherweise werden die Fittingteile lediglich miteinander verschraubt, was den Nachteil hat, dass die Verbindung sich bei mechanischen Belastungen mindestens teilweise lösen könnte. Undichtigkeiten können die Folge sein.

Es ist eine Aufgabe der vorliegenden Erfindung, ein Rohrverbindungs-Fittingsystem bereitzustellen, bei dem sichergestellt ist, dass eine ungewollte Demontage der montierten Fittingteile nicht auftreten kann. Diese Aufgabe wird erfindungsgemäß durch ein Rohrverbindungs-Fittingsystem gemäß dem Anspruch 1 gelöst. Die Unteransprüche definieren bevorzugte Ausführungsformen der Erfindung.

Erfindungsgemäß wird ein Siegelring bereitgestellt, der die beiden Fittingteile von außen übergreift und aneinander hält und so eine Demontagesicherung bereitstellt. Ein solcher Siegelring, der auch als Sicherungsring oder Haltering bezeichnet werden könnte, ist also mit anderen Worten so ausgelegt, dass er den vollständig montierten Zustand des Fittings aufrecht erhält und bewirkt, dass ein Trennen der beiden Fittingteile nicht mehr ungewollt erfolgen kann. Leckagen werden so vermieden.

Seinen Einsatz kann ein erfindungsgemäßes Rohrverbindungs-Fittingsystem insbesondere bei einem Fitting finden, bei dem das erste Fittingteil beim Zusammensetzen in das zweite Fittingteil eingeschraubt wird, wobei das erste Fittingteil dabei meist ein Konusteil ist, das ein Außengewinde aufweist, welches in ein Innengewinde des zweiten Fittingteils (Gehäuses) eingeschraubt wird. Konusförmig ist dabei die sich zum äußeren Ende des Konusteils hin verengende, innere Durchgangsöffnung.

Bei einer Ausführungsform der Erfindung übergreift der Siegelring die Fittingteile an zwei äußeren, miteinander abschließenden Ringflächen, von denen mindestens eine auch separat zu diesem Zweck als Angriffsfläche für den Siegelring geformt werden kann, wobei die beiden Flächen einen Sitz für den Siegelring bilden.

Erfindungsgemäß besteht die Möglichkeit, den Siegelring wesentlich schmaler auszugestalten, als das erste, kleinere Fittingteil, insbesondere mit einer Axiallänge, die weniger als die Hälfte der Axiallänge des ersten Fittingteils beträgt, speziell im Wesentlichen ein Drittel dieser Axiallänge oder weniger.

Der Siegelring kann in unterschiedlichster Weise auf seinen Sitz an den beiden Fittingteilen aufgebracht und dort befestigt werden. Einerseits ist es möglich, dass der Siegelring ein mittels eines Reibschlusses, insbesondere mit einem Presssitz auf die Fittingteile aufgebrachter Ring ist. Ferner besteht die Möglichkeit, den Siegelring mittels eine Haftschlusses, insbesondere mittels eines Haftmittels oder Klebers auf die Fittingteile aufzubringen, und in einer weiteren Ausführungsform kann der Siegelring einen, insbesondere in Axialrichtung wirkenden Formschluss mit mindestens einem, vorzugsweise beiden Fittingteilen eingehen. Wenn ein Formschluss gewählt wird, besteht eine Ausführungsform der Erfindung darin, dass der Siegelring hakenartige, insbesondere in Umfangsrichtung verlaufende Innenvorsprünge an mindestens einem Axialrandbereich aufweist, die in komplementäre Ausnehmungen am Außenumfang (Sitz) der Fittingteile eingreifen, oder umgekehrt.

Zwischen dem Siegelring und mindestens einem der Fittingteile kann eine Verdrehsicherung vorgesehen sein, wobei insbesondere ein axial verlaufender Steg des Siegelrings in eine Ausnehmung eingreift, die an mindestens einem der Fittingteile vorgesehen ist, oder umgekehrt.

Der Siegelring kann ein geschlossener Ring sein, er kann aber auch als offener Ring mit einem Schlitz bereitgestellt werden. Gemäß einer Ausführungsvariante übergreift der Siegelring die Fittingteile in einer nicht zerstörungsfrei ablösbaren Konfiguration, und er ist dabei insbesondere aus einem Material hergestellt, das eine geringe Elastizität aufweist.

Auch der andere Fall ist erfindungsgemäß möglich, wobei der Siegelring die Fittingteile in einer zerstörungsfrei ablösbaren Konfiguration übergreift, und er ist hierbei insbesondere aus einem Material mit einer elastischen Dehnfähigkeit hergestellt. Die Fittingteile und/oder der Siegelring sind bei einer bevorzugten Ausführungsform der Erfindung aus einem Kunststoffmaterial hergestellt. Speziell die Fittingteile, also der Fitting selbst, können aber auch aus Metall bestehen.

Die Erfindung wird im Weiteren anhand einer Ausführungsform näher erläutert. Sie kann alle hierin beschriebenen Merkmale einzeln sowie in jedweder Kombination umfassen. In den beiliegenden Zeichnungen zeigen:
- Figur 1: einen Siegelring in erfindungsgemäßer Ausführung und in perspektivischer Ansicht;
- Figur 2: einen Längsschnitt durch einen zusammengesetzten und erfindungsgemäß demontagegesicherten Fitting entlang der Ebene B-B in Figur 4;
- Figur 3: einen entsprechenden Längsschnitt entlang der Ebene A-A in Figur 4; und
- Figur 4: eine Stirnansicht des Fittings der Figuren 2 und 3 von der linken Seite in diesen Figuren.

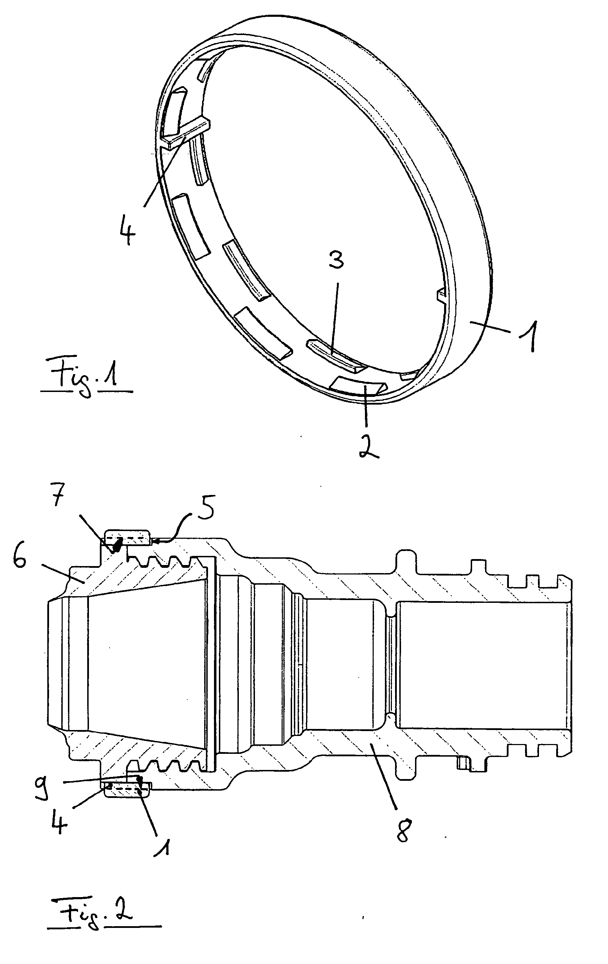

Der Siegelring, der für das erfindungsgemäße Rohrverbindungs-Fittingsystem gemäß der dargestellten Ausführungsform bereitgestellt wird, ist in Figur 1 gezeigt, und er trägt das Bezugszeichen 1. Er ist ein geschlossener Ring, der an seinem Innenumfang keilförmige, zur Mitte hin ansteigende Vorsprünge 2, 3 aufweist, die an seinen Axialrändern beginnen. An den beiden Axialrändern sind die keilförmigen Innenvorsprünge, die jeweils über eine kurze Länge in Umfangsrichtung verlaufen, einander versetzt gegenüber angeordnet. Ferner weist der Ring noch zwei ebenfalls nach innen abstehende und in Axialrichtung verlaufende Stege 4 auf, die als Verdrehsicherung dienen und später noch detaillierter erläutert werden.

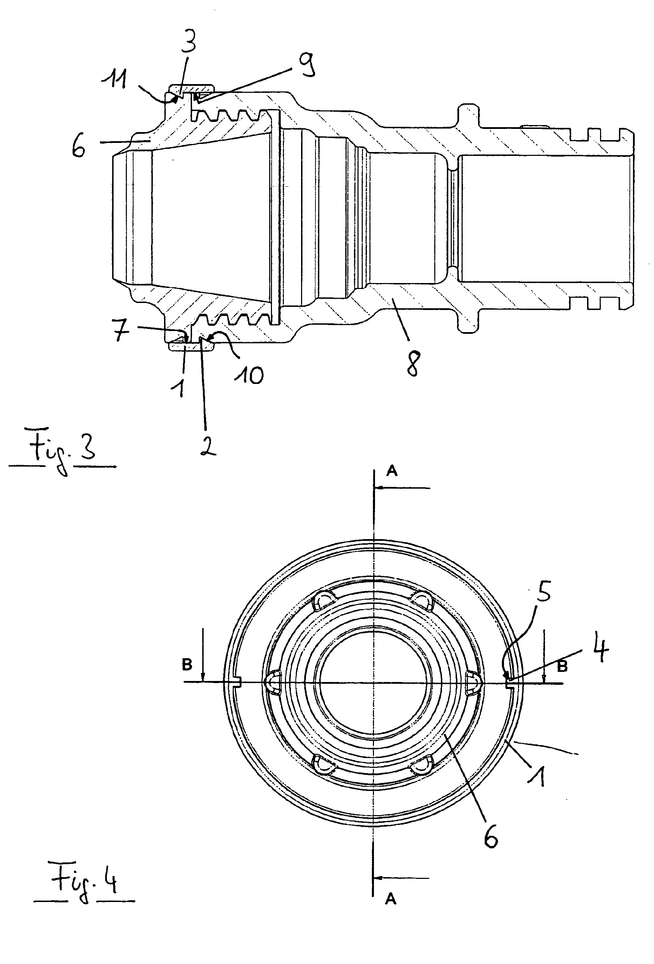

In den Figuren 2 und 3 (Schnitte B-B und A-A in Figur 4) ist gezeigt, wie der Ring 1 eine Demontagesicherung für einen Fitting bereitstellt, der aus einem Konusring 6 (erstes Fittingteil) und einem Gehäuse 8 (zweites Fittingteil) besteht. Der Konusring 6 wird mit dem dargestellten, aber nicht bezeichneten Außengewinde in das ebenfalls nicht bezeichnete Innengewinde des Gehäuses 8 eingeschraubt, bis die Ringfläche 7 des Konusrings 6 an der Ringfläche 9 des Gehäuses 8 zu liegen kommt. Die beiden Ringflächen 7 und 9 bilden dann an ihrem äußeren Umfang einen auf einer Fläche abschließenden Sitz für den Siegelring 1. Mit dem Steg 4, der nach innen von Ring 1 abragt, greift der Siegelring 1 in die Nut 5 ein, um eine Verdrehsicherung bereitzustellen, die später unter Bezug auf die Figur 4 noch näher erläutert wird.

Die Figur 3 zeigt den Schnitt A-A der Figur 4, die eine stirnseitige Ansicht auf das Konusteil des montierten Fittings bereitstellt. In der Figur 3 ist zu sehen, dass in den Ringflächen 7, 9 keilförmige, zu den Vorsprüngen 2 und 3 komplementäre Ausnehmungen 11, 10 vorgesehen sind, und im montierten Zustand greifen die Vorsprünge 2, 3 des Siegelrings 1 in die Ausnehmungen 10, 11 ein und verhindern somit, dass der Konusring 6 axial vom Gehäuse 8 wegbewegt bzw. ausgeschraubt werden kann. Weil die Vorsprünge 2, 3 des Siegelrings 1 versetzt angeordnet sind, ist in der Darstellung immer nur ein eingreifender Vorsprung auf jeder Seite, d.h. oben und unten zu sehen. Schon diese Festlegung mit den hakenartigen Innenvorsprüngen 2, 3 in den Ausnehmungen 10, 11 würde eine Demontagesicherung bereitstellen, weil der Konusring 6 nicht im Gewinde verdreht werden kann, ohne ihn auch axial nach außen zu bewegen.

Die Figur 4 zeigt in einer Stirnansicht auf das Konusteil 6 nochmals, wie der Siegelring 1 auf seinem Sitz liegt und mit dem Längssteg 4 in die Längsnut 5 eingreift, die sich über beide Fittingteile, das Konusteil 6 und das Gehäuseteil 8 im Bereich der Ringflächen 7 und 9 erstreckt. Durch den Eingriff des Steges 4 in die Nut 5 wird eine Drehbewegung zwischen Konusteil 6 und Gehäuse 8 verhindert, und auch hier ist wieder festzustellen, dass schon alleine diese Verdrehsicherung eine Demontage verhindern könnte. Wegen des Gewindeeingriffes kann das Konusteil 6 nämlich nicht ohne ein Verdrehen aus dem Gehäuse 8 heraus bewegt werden. Wenn, wie im vorliegenden Fall, sowohl die Innenvorsprünge 2, 3 mit den Ausnehmungen 10, 11 als auch der Längssteg 4 und die Ausnehmungen 5 bereitgestellt werden, wird somit eine doppelte Sicherung gegen eine Demontage vorgesehen.

## Patentansprüche

1. Rohrverbindungs-Fittingsystem mit einem ersten Fittingteil (6) und einem zweiten Fittingteil (8), wobei das erste Fittingteil (6) beim Zusammensetzen des Fittings an dem zweiten Fittingteil (8) montiert wird, **gekennzeichnet durch** einen Siegelring (1), der beide Fittingteile (6, 8) von außen übergreift und axial aneinander hält und so eine Demontagesicherung bereitstellt, wobei der Siegelring (1) mittels in komplementäre Ausnehmungen am Außenumfang der Fittingteile (6, 8) eingreifender hakenartiger Innenvorsprünge einen in Axialrichtung wirkenden Formschluss mit beiden Fittingteilen (6, 8) eingeht.

2. Rohrverbindungs-Fittingsystem nach Anspruch 1, **dadurch gekennzeichnet, dass** das erste Fittingteil (8) beim Zusammensetzen in das zweite Fittingteil (8) eingeschraubt wird.

3. Rohrverbindungs-Fittingsystem nach Anspruch 1 oder 2, **dadurch gekennzeichnet, dass** der Siegelring (1) die Fittingteile (6, 8) an zwei von der zentralen Längsachse der Rohrverbindung abgewandten Ringflächen (7, 9), die im Wesentlichen den gleichen Abstand von der zentralen Längsachse haben und einen Sitz für den Ring (1) bilden, übergreift.

4. Rohrverbindungs-Fittingsystem nach einem der Ansprüche 1 bis 3, **dadurch gekennzeichnet, dass** der Siegelring (1) in der axialen Erstreckung wesentlich schmaler ist als das erste, kleinere Fittingteil (6), insbesondere weniger als die Hälfte der Axiallänge des ersten Fittingteils (6) aufweist, speziell im Wesentlichen ein Drittel dieser Axiallänge oder weniger.

5. Rohrverbindungs-Fittingsystem nach einem der Ansprüche 1 bis 4, **dadurch gekennzeichnet, dass** der Siegelring (1) ein mittels eines Reibschlusses, insbesondere mit einem Presssitz auf die Fittingteile (6, 8) aufgebrachter Ring ist.

6. Rohrverbindungs-Fittingsystem nach einem der Ansprüche 1 bis 4, **dadurch gekennzeichnet, dass** der Siegelring (1) ein mittels eines Haftschlusses, insbesondere eines Haftmittels oder Klebers auf die Fittingteile (6, 8) aufgebrachter Ring ist.

7. Rohrverbindungs-Fittingsystem nach einem der Ansprüche 1 bis 6, **dadurch gekennzeichnet, dass** der Siegelring (1) einen, insbesondere in Axialrichtung wirkenden Formschluss mit mindestens einem, vorzugsweise beiden Fittingteilen (6, 8) eingeht.

8. Rohrverbindungs-Fittingsystem nach Anspruch 7, **dadurch gekennzeichnet, dass** der Siegelring (1) hakenartige, insbesondere in Umfangsrichtung verlaufende Innenvorsprünge (2, 3) an mindestens einem Axialrandbereich aufweist, die in komplementäre Ausnehmungen (10, 11) am Außenumfang der Fittingteile (8, 6) eingreifen, oder umgekehrt.

9. Rohrverbindungs-Fittingsystem nach einem der Ansprüche 1 bis 8, **dadurch gekennzeichnet, dass** zwischen dem Siegelring (1) und mindestens einem der Fittingteile (6, 8) eine Verdrehsicherung vorgesehen ist, wobei insbesondere ein axial verlaufender Steg (4) des Siegelrings (1) in eine Ausnehmung (5) eingreift, die an mindestens einem der Fittingteile (6, 8) vorgesehen ist, oder umgekehrt.

10. Rohrverbindungs-Fittingsystem nach einem der Ansprüche 1 bis 9, **dadurch gekennzeichnet, dass** der Siegelring (1) ein geschlossener Ring ist.

11. Rohrverbindungs-Fittingsystem nach einem der Ansprüche 1 bis 9, **dadurch gekennzeichnet, dass** der Siegelring ein offener Ring mit einem Schlitz ist.

12. Rohrverbindungs-Fittingsystem nach einem der Ansprüche 1 bis 11, **dadurch gekennzeichnet, dass** der Siegelring (1) die Fittingteile (6, 8) in einer nicht zerstörungsfrei ablösbaren Konfiguration übergreift, insbesondere aus einem Material mit geringer Elastizität besteht.

13. Rohrverbindungs-Fittingsystem nach einem der Ansprüche 1 bis 11, **dadurch gekennzeichnet, dass** der Siegelring (1) die Fittingteile (6, 8) in einer zerstörungsfrei ablösbaren Konfiguration übergreift, insbesondere aus einem Material mit einer elastischen Dehnfähigkeit besteht.

14. Rohrverbindungs-Fittingsystem nach einem der Ansprüche 1 bis 13, **dadurch gekennzeichnet, dass** der Siegelring (1) und/oder die Fittingteile aus einem Kunststoffmaterial hergestellt sind.

## Claims

1. A pipe connection fitting system comprising a first fitting part (6) and a second fitting part (8), wherein the first fitting part (6) is mounted on the second fitting part (8) when the fitting is assembled, **characterised by** a sealing ring (1) which overlaps the two fitting parts (6, 8) from without and axially clamps them to each other, thus providing a safety device against disassembly, wherein the sealing ring (1) enters into a positive fit, which acts in the axial direction, with the two fitting parts (6, 8) by means of hook-like inner projections which engage with complementary cavities on the outer circumference of the fitting parts (6, 8).

2. The pipe connection fitting system according to claim 1, **characterised in that** the first fitting part (6) is screwed into the second fitting part (8) during assembly.

3. The pipe connection fitting system according to claim 1 or 2, **characterised in that** the sealing ring (1) overlaps the fitting parts (6, 8) on two annular areas (7, 9) which face away from the central longitudinal axis of the pipe connection and have substantially the same distance from the central longitudinal axis and form a seat for the ring (1).

4. The pipe connection fitting system according to any one of claims 1 to 3, **characterised in that** the sealing ring (1) is substantially narrower in its axial extension than the first, smaller fitting part (6) and in particular exhibits less than half the axial length of the first fitting part (6), specifically substantially a third of said axial length or less.

5. The pipe connection fitting system according to any one of claims 1 to 4, **characterised in that** the sealing ring (1) is a ring which is attached by means of a frictional fit, in particular via a press fit, to the fitting parts (6, 8).

6. The pipe connection fitting system according to any one of claims 1 to 4, **characterised in that** the sealing ring (1) is a ring which is attached by means of an adhesion fit, in particular an adhesive or glue, to the fitting parts (6, 8).

7. The pipe connection fitting system according to any one of claims 1 to 6, **characterised in that** the sealing ring (1) enters into a positive fit, which in particular acts in the axial direction, with at least one and preferably both fitting parts (6, 8).

8. The pipe connection fitting system according to claim 7, **characterised in that** the sealing ring (1) comprises hook-like inner projections (2, 3) on at least one axial peripheral region which in particular run in the circumferential direction and engage with complementary cavities (10, 11) on the outer circumference of the fitting parts (8, 6), or vice versa.

9. The pipe connection fitting system according to any one of claims 1 to 8, **characterised in that** a safety device against rotation is provided between the sealing ring (1) and at least one of the fitting parts (6, 8), wherein in particular an axially running stay (4) of the sealing ring (1) engages with a cavity (5) which is provided on at least one of the fitting parts (6, 8), or vice versa.

10. The pipe connection fitting system according to any one of claims 1 to 9, **characterised in that** the sealing ring (1) is a closed ring.

11. The pipe connection fitting system according to any one of claims 1 to 9, **characterised in that** the sealing ring is an open ring comprising a slit.

12. The pipe connection fitting system according to any one of claims 1 to 11, **characterised in that** the sealing ring (1) overlaps the fitting parts (6, 8) in a configuration which cannot be detached without being destroyed, and in particular consists of a low-elasticity material.

13. The pipe connection fitting system according to any one of claims 1 to 11, **characterised in that** the sealing ring (1) overlaps the fitting parts (6, 8) in a configuration which can be detached without being destroyed, and in particular consists of an elastically extensible material.

14. The pipe connection fitting system according to any one of claims 1 to 13, **characterised in that** the sealing ring (1) and/or the fitting parts are made of a plastic material.

## Revendications

1. Raccord pour tuyau avec anneau de blocage comportant une première pièce d'assemblage (6) et une deuxième pièce d'assemblage (8), la première pièce d'assemblage (6) étant montée sur la deuxième pièce d'assemblage (8) lors de l'assemblage du raccord, **caractérisé par** un anneau de blocage (1), qui fait prise de l'extérieur sur les deux pièces d'assemblage (6, 8) et les maintient axialement l'une contre l'autre et offre ainsi une protection contre le démontage, l'anneau de blocage (1) réalisant un blocage mécanique agissant en direction axiale avec les deux pièces d'assemblage (6, 8) à l'aide de saillies intérieures en forme de crochets faisant prise dans des renfoncements complémentaires à la périphérie extérieure des pièces d'assemblage (6, 8).

2. Raccord pour tuyau avec anneau de blocage suivant la revendication 1, **caractérisé en ce que** la première pièce d'assemblage (8) est vissée dans la deuxième pièce d'assemblage (8) lors de l'assemblage.

3. Raccord pour tuyau avec anneau de blocage suivant la revendication 1 ou 2, **caractérisé en ce que** l'anneau de blocage (1) fait prise sur les pièces d'assemblage (6, 8) sur deux surfaces (7, 9) éloignées de l'axe longitudinal central du raccord pour tuyau, qui ont essentiellement le même écartement à l'axe longitudinal central et forment un siège pour l'anneau (1).

4. Raccord pour tuyau avec anneau de blocage suivant l'une des revendications 1 à 3, **caractérisé en ce que** l'anneau de blocage (1) est en direction axiale sensiblement plus petit que la première pièce d'assemblage (6), plus petite, en particulier présente une longueur égale à moins de la moitié de la longueur axiale de la première pièce d'assemblage (6), spécialement essentiellement un tiers ou moins de cette longueur axiale.

5. Raccord pour tuyau avec anneau de blocage suivant l'une des revendications 1 à 4, **caractérisé en ce que** l'anneau de blocage (1) est un anneau monté par friction, en particulier par ajustage serré sur les pièces d'assemblage (6, 8).

6. Raccord pour tuyau avec anneau de blocage suivant l'une des revendications 1 à 4, **caractérisé en ce que** l'anneau de blocage (1) est un anneau monté par adhérence, en particulier à l'aide d'un agent adhésif ou d'une colle sur les pièces d'assemblage (6, 8).

7. Raccord pour tuyau avec anneau de blocage suivant l'une des revendications 1 à 6, **caractérisé en ce que** l'anneau de blocage (1) forme un blocage mécanique agissant en particulier en direction axiale avec au moins une pièce d'assemblage, de préférence les deux pièces d'assemblage (6, 8).

8. Raccord pour tuyau avec anneau de blocage suivant la revendication 7, **caractérisé en ce que** l'anneau de blocage (1) présente sur au moins une zone de bordure axiale des saillies intérieures en forme de crochets (2, 3), s'étendant en particulier en direction périphérique, qui font prise dans des renfoncements complémentaires (10, 11) à la périphérie extérieure des pièces d'assemblage (8, 6), ou inversement.

9. Raccord pour tuyau avec anneau de blocage suivant l'une des revendications 1 à 8, **caractérisé en ce qu'**un détrompeur est prévu entre l'anneau de blocage (1) et au moins une des pièces d'assemblage (6, 8), en particulier une nervure axiale (4) de l'anneau de blocage (1) faisant prise dans un renfoncement (5), qui est prévu sur au moins une des pièces d'assemblage (6, 8), ou inversement.

10. Raccord pour tuyau avec anneau de blocage suivant l'une des revendications 1 à 9, **caractérisé en ce que** l'anneau de blocage (1) est un anneau fermé.

11. Raccord pour tuyau avec anneau de blocage suivant l'une des revendications 1 à 9, **caractérisé en ce que** l'anneau de blocage (1) est un anneau ouvert avec une fente.

12. Raccord pour tuyau avec anneau de blocage suivant l'une des revendications 1 à 11, **caractérisé en ce que** l'anneau de blocage (1) fait prise sur les pièces d'assemblage (6, 8) dans une configuration non séparable de façon non destructible, en particulier est constitué d'un matériau ayant une faible élasticité.

13. Raccord pour tuyau avec anneau de blocage suivant l'une des revendications 1 à 11, **caractérisé en ce que** l'anneau de blocage (1) fait prise sur les pièces d'assemblage (6, 8) dans une configuration séparable de façon non destructible, en particulier est constitué d'un matériau ayant une capacité d'allongement élastique.

14. Raccord pour tuyau avec anneau de blocage suivant l'une des revendications 1 à 13, **caractérisé en ce que** l'anneau de blocage (1) et/ou les pièces d'assemblage sont fabriqués en matière plastique.
